# EUROPEAN PATENT APPLICATION

(11) **EP 4 597 068 A1**
(43) Date of publication of application: **06.08.2025**
(21) Application number: 23872092.4
(22) Date of filing: 21.09.2023
(51) Int. Cl.: G01M 17/007

(54) **TEST SPECIMEN TESTING SYSTEM, TEST SPECIMEN TESTING METHOD, AND TEST SPECIMEN TESTING PROGRAM**

(30) Priority: 28.09.2022 JP 2022155190
(71) Applicant: HORIBA, Ltd., Kyoto-shi Kyoto 601-8510 (JP)
(72) Inventor: KOMATSU, Yoji, Kyoto-shi, Kyoto 601-8510 (JP); YOSHINAKA, Yuji, Kyoto-shi, Kyoto 601-8510 (JP); KOYAMA, Satoshi, Kyoto-shi, Kyoto 601-8510 (JP)
(74) Representative: Müller Hoffmann & Partner
(86) International application number: PCT/JP2023/034178
(87) International publication number: WO 2024/070865

(57) **Abstract**

An object of the present invention is to reduce the number of testing steps of a vehicle having an autonomous driving system or an advanced driver-assistance system and to enable shortening of the development period of the vehicle, and the present invention is a test specimen testing system 100 for testing a test specimen W that is a vehicle or a part of the vehicle having the ADAS or the AD, including: a dynamometer 2 for causing the test specimen W to perform simulation traveling; a surrounding environment input device 3 that inputs a surrounding environment to the test specimen W; and an autonomous driving robot 4 that performs a brake operation, an accelerator operation, or a steering wheel operation of the test specimen W. Based on an input from the surrounding environment input device 3, test specimen testing system 100 links, using the autonomous driving robot, an active traveling state in which the test specimen W actively travels by the ADAS or the AD and a passive traveling state in which the test specimen W passively travels by the brake operation, the accelerator operation, or the steering wheel operation.

## Description

### Technical Field

The present invention relates to a test specimen testing system, a test specimen testing method, and a test specimen testing program.

### Background Art

Conventionally, when an advanced driver-assistance system or an autonomous driving system (hereinafter, also referred to as AD/ADAS) such as adaptive cruise control (ACC) is developed using a dynamometer, the following operations (1) to (5) are performed by a human.
(1) The dynamometer applies a load to a vehicle based on a predetermined load calculation.
(2) A driver operates the vehicle until it becomes possible to enable the AD/ADAS (engine-on, gear shift, acceleration, and the like).
(3) Functions such as adaptive cruise control by the AD/ADAS of the vehicle are enabled.
(4) The functions such as adaptive cruise control by the AD/ADAS of the vehicle are stopped.
(5) The vehicle is stopped by the operation of the driver.

Note that, as disclosed in Patent Literature 1, a vehicle inspection device that inspects a vehicle equipped with a driver-assistance system is considered. The vehicle inspection device includes a free loader for travel inspection, and a diagnosis device that outputs a simulation signal created in advance based on an image signal output from a stereo camera and confirms an operation of a driver-assistance system. The vehicle inspection device inputs the simulation signal to a self-diagnosis circuit of an image processing unit in a state where the vehicle is carried in on the free loader to operate the driver-assistance system in order to confirm the operation.

### Citation List

### Patent Literature

Patent Literature 1: JP 2002-257688 A

### Summary of Invention

### Technical Problem

In recent years, with an increase in demand for vehicles having AD/ADAS, the number of tests for development of the vehicles has increased, and the number of testing steps required for the development has increased. Meanwhile, it is difficult to secure the number of testing steps required for the development due to the shortage of manpower caused by the declining birthrate and aging population. Therefore, although automation of a vehicle test is considered, in the existing vehicle test that uses the dynamometer, there is no system that mutually transfers operation by a driver and operation by the AD/ADAS and thus, it is difficult to realize the automation of the vehicle test.

The present invention has been made in view of the above-described problems, and a main object thereof is to reduce the number of testing steps of a vehicle having an autonomous driving system or an advanced driver-assistance system and to enable shortening of the development period of the vehicle.

### Solution to Problem

That is, a test specimen testing system according to the present invention is a test specimen testing system for testing a test specimen that is a vehicle or a part of the vehicle having an autonomous driving system (hereinafter, AD) or an advanced driver-assistance system (hereinafter, ADAS), including: a dynamometer that applies a load to the test specimen; and an autonomous driving robot that performs a brake operation, an accelerator operation, or a steering wheel operation of the test specimen, in which an active traveling state in which the test specimen actively travels by the AD or the ADAS and a passive traveling state in which the test specimen passively travels by the brake operation, the accelerator operation, or the steering wheel operation are linked using the autonomous driving robot.

In such a test specimen testing system, since the active traveling state in which the test specimen actively travels by the AD or the ADAS and the passive traveling state in which the test specimen passively travels by the brake operation, the accelerator operation, or the steering wheel operation are linked using the autonomous driving robot, it is not necessary for a person to take charge of the passive traveling state of the test specimen. Therefore, it is possible to reduce the number of testing steps of a vehicle having the AD or the ADAS and to enable shortening of the development period of the vehicle by allowing, for example, an operation such as night autonomous driving of the test.

In order to test the function of the AD or the ADAS, the test specimen testing system further includes a control unit that controls the autonomous driving robot, and the control unit controls the dynamometer and the autonomous driving robot to link the active traveling state and the passive traveling state. Note that the control unit includes a load control device that controls the dynamometer, a robot control device that controls the autonomous driving robot, and a host control device that controls the dynamometer and the autonomous driving robot by inputting various signals to such control devices.

In addition, in order to test the function of the AD or the ADAS, the test specimen testing system of the present invention may further include a surrounding environment input device that inputs, to the test specimen, a simulation signal simulating a surrounding environment, and the control unit may control the autonomous driving robot in accordance with an input from the surrounding environment input device to link the active traveling state and the passive traveling state.

The control unit may also control the dynamometer, and the control unit may also control the autonomous driving robot and the dynamometer to link the active traveling state and the passive traveling state.

As a specific embodiment for automatically shifting from passive driving by the autonomous driving robot to active driving by the AD or the ADAS, it is desirable that the autonomous driving robot include an actuating actuator that makes the active traveling of the test specimen by the AD or the ADAS to be started or ended, and stop at least one of the brake operation, the accelerator operation, or the steering wheel operation of the test specimen or operate an operation button related to the ADAS at a timing when the active traveling of the test specimen by the AD or the ADAS is started.

As a specific embodiment for automatically shifting from the active driving by the AD or the ADAS to the passive driving by the autonomous driving robot, it is desirable that the autonomous driving robot resume at least one of the brake operation, the accelerator operation, or the steering wheel operation of the test specimen, or operate the operation button related to the ADAS at a timing when the active traveling of the test specimen by the AD or the ADAS is ended.

When enabling adaptive cruise control or the like of the AD or the ADAS, it is necessary to set an ADAS state, a target vehicle speed, or an inter-vehicle distance. Note that the ADAS state includes at least one of an off state, a standby state, and a set state of the ADAS. Therefore, in order to inspect the adaptive cruise control of the AD or the ADAS by the test specimen testing system of the present invention, it is desirable that the test specimen testing system of the present invention further include: a camera that captures an instrument panel or a head-up display of the test specimen; and an analysis device that reads and analyzes a captured image of the camera, the actuator have a function of setting the adaptive cruise control of the test specimen, and the autonomous driving robot set, by the actuator, at least one of the target vehicle speed of the test specimen or the inter-vehicle distance with respect to a preceding vehicle of the test specimen based on a result of reading and analyzing the captured image of the camera.

Here, switching between the active traveling state and the passive traveling state, continuation of the passive traveling state, or the like is performed in accordance with the reading/analyzing result by the analysis device.

### (1) Example of shifting from passive traveling state to active traveling state

When detecting that a vehicle has entered a region where the adaptive cruise control (ACC) can be turned on from a vehicle speed display of a meter or the like (for example, a vehicle speed of 30 km/h), the autonomous driving robot presses an ADAS set button and shifts to ADAS traveling.

### (2) Example of shifting from active traveling state to passive traveling state

When detecting that a vehicle has deviated from an actuating region of the adaptive cruise control (ACC) from a vehicle speed display of a meter or the like (for example, a vehicle speed slower than a predetermined vehicle speed, or a vehicle speed faster than the predetermined vehicle speed), the autonomous driving robot starts active driving by a pedal operation.

### (3) Example of continuation of passive driving by ADAS

When a preceding vehicle stops during passive driving, the own vehicle automatically stops. Then, a brake depression instruction is displayed on a meter. When this display is recognized, the autonomous driving robot presses the brake (ADAS continuation). Thereafter, when the preceding vehicle starts traveling, a restart button pressing instruction is displayed on the meter. When this display is recognized, the autonomous driving robot operates a button on a steering wheel and the own vehicle starts traveling.

The operation button of the AD or the ADAS is often provided on a steering, and when a manipulator is extended from a robot main body of the autonomous driving robot provided on a driver's seat as in the conventional case, the operation button cannot be pressed at the time of steering. In order to suitably solve this problem, it is desirable that the actuating actuator be fixed to the steering of the test specimen.

In addition, during active traveling by the AD or the ADAS, a hands-on state (state of holding the steering) may be required depending on the conditions. In this case, it is desirable to provide a hands-on simulation unit that simulates the hands-on state in a fixing member that fixes the actuating actuator to the steering. In a case where a sensor that detects the hands-on state is a torque sensor, the hands-on simulation unit is configured by providing a weight to the fixing member. In a case where a sensor that detects the hands-on state is a capacitive sensor, the hands-on simulation unit is configured by providing a capacitor on a steering contact surface of the fixing member. Note that, in a case where a steering wheel rotates on its own due to the deviation in the arrangement of the actuating actuator or the weight provided on the steering wheel, an additional weight may be provided on the opposite side in order to achieve balance.

In order to stop the active traveling by the AD or the ADAS in a case where the test specimen testing system cannot perform normal driving due to a power failure, a power loss, or the like, it is desirable that the autonomous driving robot include a stop actuator that makes the active traveling of the test specimen by the AD or the ADAS to be cancelled by stepping on a brake pedal of the test specimen or pressing a cancel button of an AD or ADAS function.

In addition, a test specimen testing method according to the present invention is a test specimen testing method for testing a test specimen that is a vehicle or a part of the vehicle having an autonomous driving system (hereinafter, AD) or an advanced driver-assistance system (hereinafter, ADAS), including, by using a dynamometer that applies a load to the test specimen, and an autonomous driving robot that performs a brake operation, an accelerator operation, or a steering wheel operation of the test specimen: linking, using the autonomous driving robot, an active traveling state in which the test specimen actively travels by the AD or the ADAS and a passive traveling state in which the test specimen passively travels by the brake operation, the accelerator operation, or the steering wheel operation.

Furthermore, a test specimen testing program according to the present invention is a test specimen testing program used in a test specimen testing system for testing a test specimen that is a vehicle or a part of the vehicle having an autonomous driving system (hereinafter, AD) or an advanced driver-assistance system (hereinafter, ADAS), the test specimen testing system includes a dynamometer that applies a load to the test specimen, and an autonomous driving robot that performs a brake operation, an accelerator operation, or a steering wheel operation of the test specimen, and the test specimen testing program causes a computer to exhibit a function of linking an active traveling state in which the test specimen actively travels by the AD or the ADAS and a passive traveling state in which the test specimen passively travels by the brake operation, the accelerator operation, or the steering wheel operation, by controlling the autonomous driving robot.

### Advantageous Effects of Invention

According to the present invention configured as described above, it is possible to reduce the number of testing steps of a vehicle having an autonomous driving system or an advanced driver-assistance system and to enable shortening of the development period of the vehicle.

### Brief Description of Drawings

FIG. 1 is a schematic diagram illustrating a test specimen testing system according to an embodiment of the present invention.
FIG. 2 is a schematic diagram illustrating a gradient profile with respect to a travel distance according to the embodiment.
FIG. 3 is a schematic view of a steering (steering wheel) according to the embodiment as viewed from the front.
FIG. 4 is a schematic view illustrating a configuration of a hands-on simulation unit of the embodiment.
FIG. 5 is a schematic view illustrating a stop actuator of the embodiment.
FIG. 6 is a diagram indicating a procedure of a test specimen testing method of the embodiment.

### Description of Embodiments

### <Embodiment of present invention>

Hereinafter, an embodiment of a test specimen testing system according to the present invention will be described with reference to the drawings. Note that each of the drawings below is schematically illustrated with appropriate omission or exaggeration for ease of understanding. The same components are denoted by the same reference numerals, and the description thereof will be omitted as appropriate.

A test specimen testing system 100 of the present embodiment tests a test specimen W that is a vehicle or a part of the vehicle having an autonomous driving system (hereinafter, AD) or an advanced driver-assistance system (hereinafter, ADAS), which will also be hereinafter referred to as an AD/ADAS vehicle.

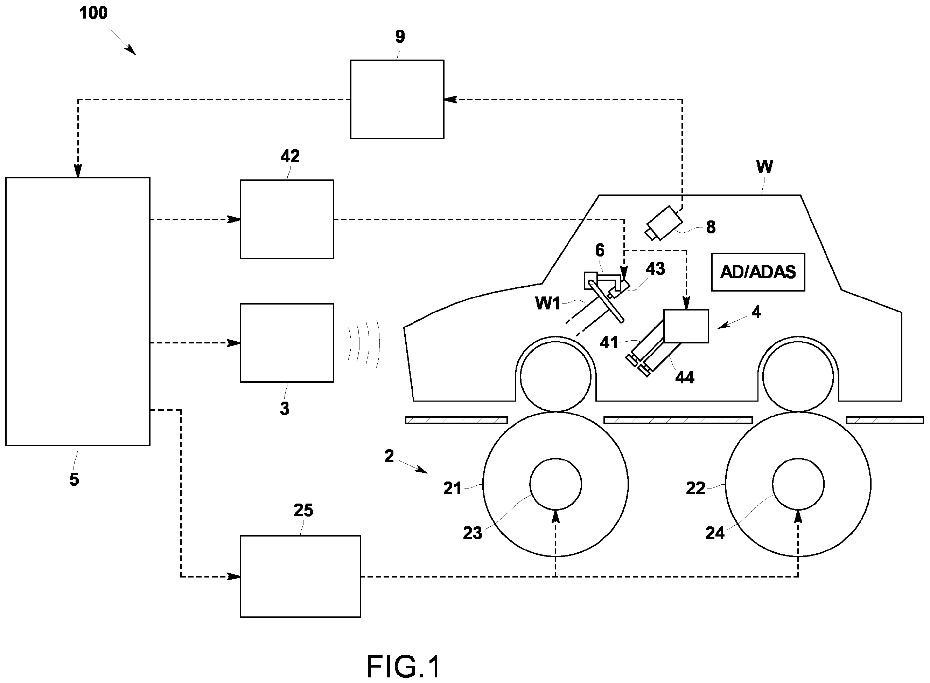

Specifically, as illustrated in FIG. 1, the test specimen testing system 100 includes a dynamometer 2 for causing the test specimen W to perform simulation traveling, a surrounding environment input device 3 that inputs a surrounding environment to the test specimen W, and an autonomous driving robot 4 that performs a brake operation, an accelerator operation, or a steering wheel operation of the test specimen W.

The dynamometer 2 of the present embodiment is a so-called chassis dynamometer, and includes a front wheel-side roller 21 on which a front wheel of the test specimen is mounted, a rear wheel-side roller 22 on which a rear wheel of the test specimen is mounted, load devices 23 and 24 respectively connected to the front wheel-side roller 21 and the rear wheel-side roller 22, and a load control device 25 that controls the load devices 23 and 24. Note that the front wheel-side roller 21 and the rear wheel-side roller 22 of the dynamometer 2 rotate following the traveling of the test specimen W.

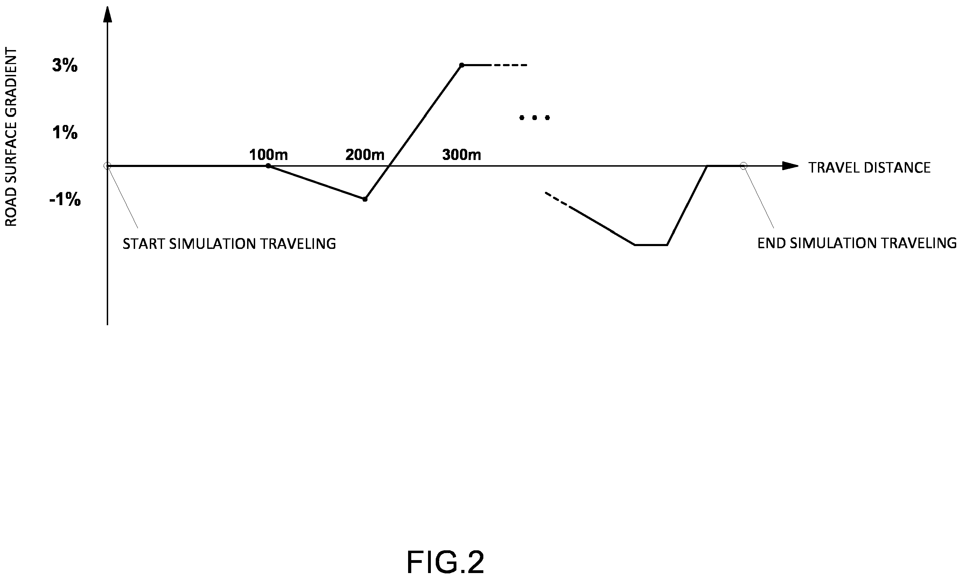

The load control device 25 controls the load devices 23 and 24 so that the test specimen W can travel in a predetermined travel pattern (vehicle speed pattern). In order to reproduce the load due to the road surface gradient, as illustrated in FIG. 2, the load control device 25 of the present embodiment performs gradient control with respect to the travel distance in road load simulation (RLS) control of the dynamometer in the predetermined traveling pattern. The gradient control with respect to the travel distance is performed by using a gradient profile in which a load corresponding to the gradient is associated with the travel distance of the test specimen W.

In FIG. 2, for example, a section from a point where the travel distance is 100 m to a point where the travel distance is 200 m has a downward gradient, and the load control device 25 controls the load devices 23 and 24 so that a negative gradient load corresponding to the downward gradient is obtained. In addition, a section from the point where the travel distance is 200 m to a point where the travel distance is 300 m has an upward gradient, and the load control device 25 controls the load devices 23 and 24 so that a positive gradient load corresponding to the upward gradient is obtained. Moreover, in a case of a flat land (gradient is zero), the load control device 25 controls the load devices 23 and 24 so that the gradient load becomes zero.

Note that the dynamometer 2 is not limited to the chassis dynamometer, and may be a hub dynamo, a flat dynamo, or the like connected to an axle of the test specimen W. In the case of a configuration including the hub dynamo, for example, the hub dynamo may be connected to the axle using a free wheel or a universal joint. In addition, the dynamometer 2 may be connected only to a drive wheel of the test specimen W.

The surrounding environment input device 3 inputs, to the test specimen W, the surrounding environment of when the test specimen W performs the simulation traveling. Specifically, the surrounding environment input device 3 may input, to various sensors (radar, LiDAR, ultrasonic sensor, camera, GNSS, or the like) mounted on the test specimen W, a simulation signal simulating the surrounding environment of when the test specimen W performs the simulation traveling.

In this case, the surrounding environment input device 3 includes a radar simulator that inputs a radar simulation signal to a radar, a LiDAR simulator that inputs a LiDAR simulation signal to a LiDAR, an ultrasonic sensor simulator that inputs an ultrasonic sensor simulation signal to an ultrasonic sensor, a camera simulator that inputs a camera simulation signal to a camera, a GNSS simulator that inputs a GNSS simulation signal to a GNSS, or the like. In addition, the surrounding environment input device 3 may be a physical structure that is arranged around the various sensors and simulates the surrounding environment.

Furthermore, the surrounding environment input device 3 may input a simulation signal simulating the surrounding environment of when the test specimen W performs the simulation traveling to the ECU of the AD/ADAS vehicle.

The autonomous driving robot 4 includes an operation actuator 41 that operates a brake pedal, an accelerator pedal, or a steering wheel of the test specimen W, and a robot control device 42 that controls the operation actuator 41. The robot control device 42 operates the operation actuator 41 so that the test specimen W can travel according to a command value based on a command from a host control device 5 or can travel in a predetermined travel pattern (vehicle speed pattern).

As illustrated in FIG. 1, the dynamometer 2, the surrounding environment input device 3, and the autonomous driving robot 4 described above are controlled by the host control device 5. Specifically, the host control device 5 inputs various signals to the load control device 25 of the dynamometer 2, the surrounding environment input device 3, and the robot control device 42 of the autonomous driving robot 4 to control the dynamometer 2, the surrounding environment input device 3, and the autonomous driving robot 4. Note that, in a case where the surrounding environment input device 3 inputs the simulation signal to the ECU of the AD/ADAS vehicle, the surrounding environment input device 3 may be incorporated in the host control device 5.

In addition, in accordance with the input from the surrounding environment input device 3, the test specimen testing system 100 of the present embodiment links, by the autonomous driving robot 4, an active traveling state in which the test specimen W actively travels by the AD/ADAS and a passive traveling state in which the test specimen W passively travels by the brake operation, the accelerator operation, or the steering wheel operation.

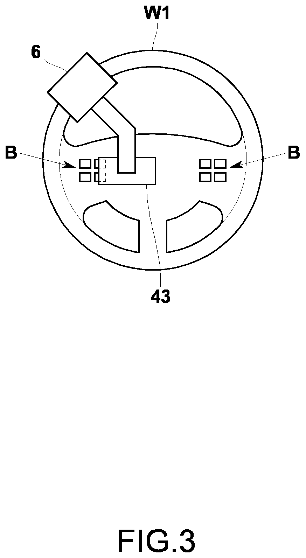

Specifically, as illustrated in FIGS. 1 and 3, the autonomous driving robot 4 includes an actuating actuator 43 that makes active traveling of the test specimen W by the AD or the ADAS to be started or ended. The actuating actuator 43 operates at least the start of the active traveling by operating a start button included in a button group B (see FIG. 3) provided on a front surface of the steering wheel of a steering W1 of the test specimen W. The operation of the start button is performed by controlling the actuating actuator 43 by the robot control device 42.

The actuating actuator 43 is fixed to the steering W1 (specifically, the steering wheel) of the test specimen W. Specifically, the actuating actuator 43 is fixed to the steering W1 by a fixing member 6.

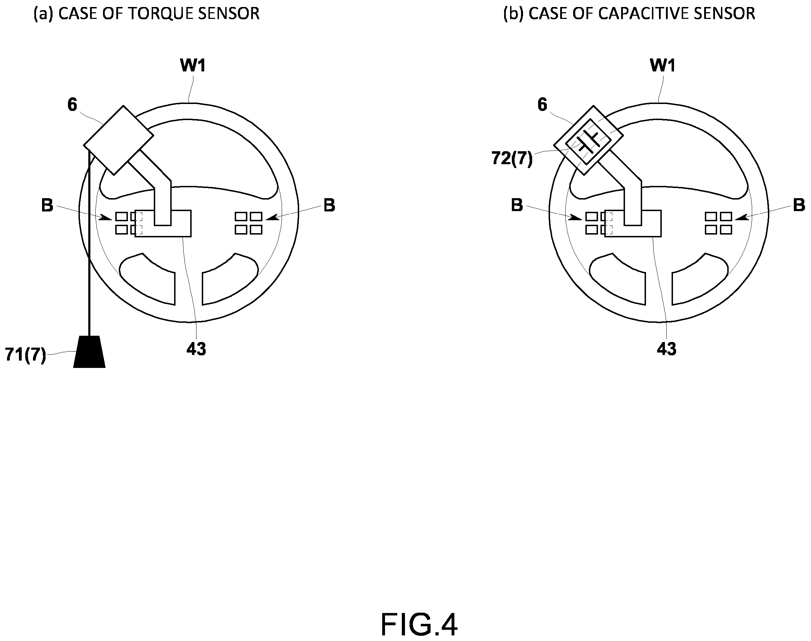

Here, as illustrated in FIG. 4, the fixing member 6 is provided with a hands-on simulation unit 7 that simulates a hands-on state (state where the driver holds the steering wheel) to the steering wheel of the steering W1. In a case where a sensor that detects the hands-on state is a torque sensor, the hands-on simulation unit 7 may be configured by, for example, providing a weight 71 to the fixing member 6, as illustrated in FIG. 4(a). In a case where a sensor that detects the hands-on state is a capacitive sensor, the hands-on simulation unit 7 may be configured by, for example, providing a capacitor 72 on a steering contact surface of the fixing member 6, as illustrated in FIG. 4(b).

The autonomous driving robot 4 stops at least one of the brake operation, the accelerator operation, or the steering wheel operation by the operation actuator 41 at a timing when the active traveling by the AD/ADAS is started. As a result, the test specimen W enters the active traveling state. The stop of at least one of the brake operation, the accelerator operation, and the steering wheel operation is performed by controlling the operation actuator 41 by the robot control device 42.

In addition, the autonomous driving robot 4 resumes at least one of the brake operation, the accelerator operation, or the steering wheel operation of the test specimen W at a timing when the active traveling by the AD/ADAS is ended or at a timing when the active traveling is ended due to another event (event causing the active traveling to end). As a result, the test specimen W enters the passive traveling state. The resume of at least one of the brake operation, the accelerator operation, or the steering wheel operation is performed by controlling the operation actuator 41 by the robot control device 42.

Here, a specific example for testing the function of adaptive cruise control of the test specimen W will be described.

In this case, as illustrated in FIG. 1, the test specimen testing system 100 may further include a camera 8 that captures an instrument panel of the test specimen W, and an analysis device 9 that reads and analyzes a captured image of the camera 8. The image captured by the camera 8 (any of still images or moving images may be used) is transmitted to the analysis device 9. The reading/analyzing result by the analysis device 9 is transmitted to the host control device 5, and the host control device 5 operates the actuating actuator 43 in accordance with the transmitted content to start the active traveling.

In addition, the actuating actuator 43 of the autonomous driving robot 4 has a function of setting the adaptive cruise control of the test specimen W. The actuating actuator 43 sets the adaptive cruise control by operating a setting button (included in the button group B (see FIG. 3)) of the adaptive cruise control provided on the front surface of the steering wheel of the steering, for example. Specifically, the autonomous driving robot 4 sets, by the actuating actuator 43, at least one of the target vehicle speed of the test specimen W or the inter-vehicle distance with respect to a preceding vehicle of the test specimen W based on the reading/analyzing result of the captured image of the camera 8. This setting is performed in such a manner that the host control device 5 transmits a setting signal to the robot control device 42 so that a predetermined setting value is obtained based on the reading/analyzing result of the captured image of the camera 8, and the robot control device 42 that has received the setting signal controls the actuating actuator 43.

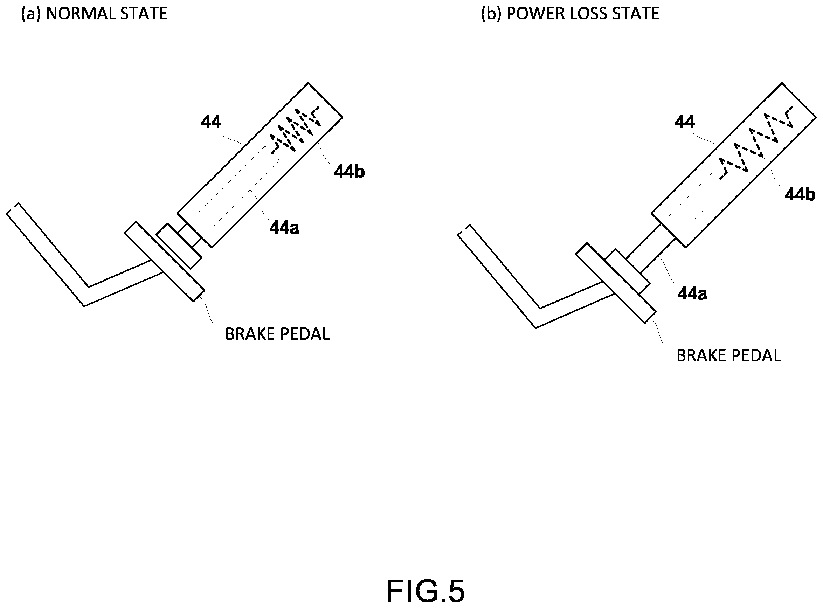

Furthermore, the test specimen testing system 100 of the present embodiment may have an emergency stop function of stopping the active traveling by the AD/ADAS in a case where a power loss occurs due to a power failure or the like. Specifically, as illustrated in FIGS. 1 and 5, the autonomous driving robot 4 includes a stop actuator 44 that makes the active traveling of the test specimen W by the AD/ADAS to be cancelled by stepping on the brake pedal of the test specimen W.

The stop actuator 44 is configured to step on the brake pedal in a state where power is not supplied. For example, in a normal state, a plunger 44a is away from the brake pedal due to motor driving or the like, as illustrated in FIG. 5(a), and in a power loss state such as a power failure, the motor driving or the like is released and the plunger 44a extends by an elastic body 44b or the like to step on the brake pedal, as illustrated in FIG. 5(b). As a result, the active traveling by the AD/ADAS is canceled. Thereafter, the test specimen W is stopped. Although the stop actuator 44 is provided separately from the actuator 41 for brake operation, the stop actuator 44 and the actuator 41 for brake operation may be used in common. In addition, the stop actuator 44 may be configured to press a predetermined button for canceling the function of the AD/ADAS. Moreover, the stop actuator 44 may be configured using an air cylinder.

### <Test specimen testing method>

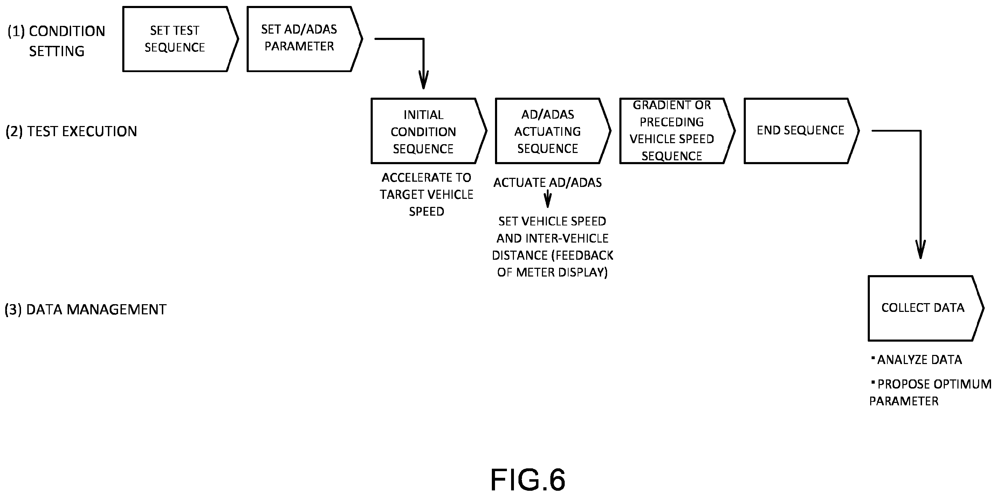

Next, a test specimen testing method using the test specimen testing system 100 of the present embodiment will be described with reference to FIG. 6.

### (1) Setting of test sequence conditions

First, the test specimen W is placed on the chassis dynamometer 2. In addition, a test sequence is set using the host control device 5. The setting of the test sequence includes setting of a vehicle speed pattern of the test specimen W, setting of road surface information including a road surface gradient, setting of a position of a preceding vehicle and a vehicle speed pattern of the preceding vehicle, setting of various parameters of the AD/ADAS in the test specimen W, or the like. Note that the various parameters include parameters related to control to be adapted in development, parameters selected by the driver in accordance with preference, such as a set vehicle speed or a set inter-vehicle distance, or the like.

### (2) Test execution

### (2-1) Initial condition sequence

By execution of the test, the host control device 5 inputs a target vehicle speed signal to the robot control device 42 of the autonomous driving robot 4 and the robot control device 42 controls the actuator 41 for accelerator operation, to accelerate the test specimen W to the target vehicle speed (passive traveling state).

### (2-2) AD/ADAS actuating sequence

After the test specimen W is accelerated to the target vehicle speed, the host control device 5 inputs an AD/ADAS actuating signal to the robot control device 42 of the autonomous driving robot 4 and the robot control device 42 controls the actuating actuator 43, to operate an AD/ADAS actuating button of the test specimen W. As a result, the AD/ADAS of the test specimen W is actuated. Then, the host control device 5 determines the setting values of the target vehicle speed of the test specimen W and the inter-vehicle distance with respect to the preceding vehicle of the test specimen W based on the reading/analyzing result of the captured image of the camera 8, and inputs the signal to the robot control device 42. For example, the robot control device 42 controls the actuating actuator 43 to operate the setting button of the adaptive cruise control to set the adaptive cruise control. As a result, the test specimen W travels on the chassis dynamometer 2 by the adaptive cruise control (active traveling state). At the same time as or after the AD/ADAS actuating sequence is started, a simulation signal simulating the surrounding environment such as information indicating a preceding vehicle (for example, a vehicle speed of the preceding vehicle) is input to the test specimen W by the surrounding environment input device 3.

### (2-3) Gradient or preceding vehicle speed sequence

In the present embodiment, the load due to the road surface gradient is applied to the test specimen W while the test specimen W is traveling by the adaptive cruise control. The load due to the road surface gradient is input by the load devices 23 and 24. Here, the road surface gradient may be a step gradient in which the gradient changes stepwise, or may be a transient gradient in which the gradient continuously changes.

### (2-4) End sequence

After the gradient sequence described above is completed, the host control device 5 inputs an AD/ADAS stop signal to the robot control device 42 of the autonomous driving robot 4 and the robot control device 42 controls the actuating actuator 43, to operate a stop button of the adaptive cruise control of the test specimen W. As a result, the adaptive cruise control of the test specimen W is stopped. Next, the robot control device 42 controls the actuator 43 to stop the AD/ADAS of the test specimen W. When the AD/ADAS of the test specimen W is stopped, the robot control device 42 controls the actuator 41 for brake operation and the like to stop the test specimen W.

### (3) Data management

Various kinds of data obtained from "(2) Test execution" described above are collected and analyzed by the host control device 5. As a result, it is possible to examine the validity of the parameter related to the control of the AD/ADAS in the test specimen W and propose an optimum parameter.

### <Effects of present embodiment>

According to the test specimen testing system 100 of the present embodiment configured as described above, since the active traveling state in which the test specimen W actively travels by the AD/ADAS and the passive traveling state in which the test specimen W passively travels by the brake operation, the accelerator operation, or the steering wheel operation are linked using the autonomous driving robot 4, it is not necessary for a person to take charge of the passive traveling state of the test specimen W. As a result, it is possible to reduce the number of testing steps of a vehicle having AD/ADAS and to enable shortening of the development period of the vehicle by allowing, for example, an operation such as night autonomous driving of the test.

### <Other embodiments>

For example, in the above embodiment, an example of testing the function of the adaptive cruise control has been described, but other various functions of the AD/ADAS (for example, lane keeping, emergency avoidance, automatic braking, and the like) may be tested. In this case, in accordance with the test of each of the various functions of the AD/ADAS, a simulation signal for testing each of the various functions is input to a test specimen W by a surrounding environment input device 3.

In addition, a load by a dynamometer is acquired by an external simulation device, and the vehicle speed corresponding to a vehicle model and an external environment (road or the like) is calculated. A chassis dynamometer 2 may be controlled using the calculated vehicle speed as a target vehicle speed. In this case, the chassis dynamometer 2 is subjected to speed control so as to achieve the calculated target vehicle speed.

In addition, various modifications and combinations of the embodiments may be made without departing from the gist of the present invention.

### Industrial Applicability

According to the present invention, it is possible to reduce the number of testing steps of a vehicle having an autonomous driving system or an advanced driver-assistance system and to enable shortening of the development period of the vehicle.

### Reference Signs List

- 100: test specimen testing system
- W: test specimen
- 2: dynamometer
- 3: surrounding environment input device
- 4: autonomous driving robot
- 41: operation actuator
- 42: robot control device
- 43: actuating actuator
- 44: stop actuator
- 5: host control device

## Claims

1. A test specimen testing system for testing a test specimen that is a vehicle or a part of the vehicle having an autonomous driving system (hereinafter, AD) or an advanced driver-assistance system (hereinafter, ADAS), the test specimen testing system comprising:
a dynamometer that applies a load to the test specimen; and
an autonomous driving robot that performs a brake operation, an accelerator operation, or a steering wheel operation of the test specimen,
wherein an active traveling state in which the test specimen actively travels by the AD or the ADAS and a passive traveling state in which the test specimen passively travels by the brake operation, the accelerator operation, or the steering wheel operation are linked using the autonomous driving robot.

2. The test specimen testing system according to claim 1, further comprising a control unit that controls the autonomous driving robot,
wherein the control unit controls the autonomous driving robot to link the active traveling state and the passive traveling state.

3. The test specimen testing system according to claim 2, further comprising a surrounding environment input device that inputs, to the test specimen, a simulation signal simulating a surrounding environment,
wherein the control unit controls the autonomous driving robot in accordance with an input from the surrounding environment input device to link the active traveling state and the passive traveling state.

4. The test specimen testing system according to claim 2 or 3, wherein
the control unit controls the dynamometer, and
the control unit controls the autonomous driving robot and the dynamometer to link the active traveling state and the passive traveling state.

5. The test specimen testing system according to any one of claims 1 to 4, wherein the autonomous driving robot
includes an actuating actuator that makes active traveling of the test specimen by the AD or the ADAS to be started or ended, and
stops at least one of the brake operation, the accelerator operation, or the steering wheel operation of the test specimen at a timing when the active traveling of the test specimen by the AD or the ADAS is started.

6. The test specimen testing system according to claim 5, wherein the autonomous driving robot resumes at least one of the brake operation, the accelerator operation, or the steering wheel operation of the test specimen at a timing when the active traveling of the test specimen by the AD or the ADAS is ended.

7. The test specimen testing system according to claim 5 or 6, further comprising:
a camera that captures an instrument panel or a head-up display of the test specimen; and
an analysis device that reads and analyzes a captured image of the camera,
wherein
the actuating actuator has a function of setting adaptive cruise control of the test specimen, and
the autonomous driving robot sets, by the actuating actuator, at least one of a target vehicle speed of the test specimen or an inter-vehicle distance with respect to a preceding vehicle of the test specimen based on a result of reading and analyzing the captured image of the camera.

8. The test specimen testing system according to any one of claims 5 to 7, wherein the actuating actuator is fixed to a steering of the test specimen.

9. The test specimen testing system according to claim 8, wherein a hands-on simulation unit that simulates a hands-on state is provided in a fixing member that fixes the actuating actuator to the steering.

10. The test specimen testing system according to any one of claims 1 to 9, wherein the autonomous driving robot includes a stop actuator that makes the active traveling of the test specimen by the AD or the ADAS to be cancelled by stepping on a brake pedal of the test specimen or pressing a cancel button of an AD or ADAS function.

11. A test specimen testing method for testing a test specimen that is a vehicle or a part of the vehicle having an autonomous driving system (hereinafter, AD) or an advanced driver-assistance system (hereinafter, ADAS), the test specimen testing method comprising,
by using a dynamometer that applies a load to the test specimen, and an autonomous driving robot that performs a brake operation, an accelerator operation, or a steering wheel operation of the test specimen,
linking, using the autonomous driving robot, an active traveling state in which the test specimen actively travels by the AD or the ADAS and a passive traveling state in which the test specimen passively travels by the brake operation, the accelerator operation, or the steering wheel operation.

12. A test specimen testing program used in a test specimen testing system for testing a test specimen that is a vehicle or a part of the vehicle having an autonomous driving system (hereinafter, AD) or an advanced driver-assistance system (hereinafter, ADAS),
the test specimen testing system including
a dynamometer that applies a load to the test specimen, and
an autonomous driving robot that performs a brake operation, an accelerator operation, or a steering wheel operation of the test specimen,
the test specimen testing program causing a computer to exhibit a function of linking an active traveling state in which the test specimen actively travels by the AD or the ADAS and a passive traveling state in which the test specimen passively travels by the brake operation, the accelerator operation, or the steering wheel operation, by controlling the autonomous driving robot.
